(19) Europäisches Patentamt
European Patent Office
Office européen des brevets

(11) **EP 2 722 724 B1**

(12) **EUROPEAN PATENT SPECIFICATION**

(45) Date of publication and mention
of the grant of the patent:
**11.10.2017 Bulletin 2017/41**

(51) Int Cl.:
***G05F 5/00*** *(2006.01)* ***G05F 1/67*** *(2006.01)*
***H02J 3/38*** *(2006.01)*

(21) Application number: **12188646.9**

(22) Date of filing: **16.10.2012**

(54) **Maximum power point tracking**

Maximale Leistungspunktverfolgung

Suivi de point de puissance maximale

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.04.2014 Bulletin 2014/17**

(73) Proprietor: **ABB Schweiz AG**
**5400 Baden (CH)**

(72) Inventors:
• **Pulli, Tuomas**
**00380 Helsinki (FI)**
• **Hellberg, Janne**
**00380 Helsinki (FI)**

(74) Representative: **Kolster Oy Ab**
**(Salmisaarenaukio 1)**
**P.O. Box 204**
**00181 Helsinki (FI)**

(56) References cited:
• **SALAS V ET AL: "Review of the maximum power point tracking algorithms for stand-alone photovoltaic systems", SOLAR ENERGY MATERIALS AND SOLAR CELLS, ELSEVIER SCIENCE PUBLISHERS, AMSTERDAM, NL, vol. 90, no. 11, 6 July 2006 (2006-07-06), pages 1555-1578, XP028002144, ISSN: 0927-0248, DOI: 10.1016/J.SOLMAT.2005.10.023 [retrieved on 2006-07-06]**
• **ESRAM T ET AL: "Comparison of Photovoltaic Array Maximum Power Point Tracking Techniques", IEEE TRANSACTIONS ON ENERGY CONVERSION, IEEE SERVICE CENTER, PISCATAWAY, NJ, US, vol. 22, no. 2, 1 June 2007 (2007-06-01), pages 439-449, XP011184738, ISSN: 0885-8969, DOI: 10.1109/TEC.2006.874230**
• **D. Sera ET AL: "Improved MPPT method for rapidly changing environmental conditions", 2006 IEEE International Symposium on Industrial Electronics, 1 July 2006 (2006-07-01), pages 1420-1425, XP055044309, DOI: 10.1109/ISIE.2006.295680 ISBN: 978-1-42-440496-4**

EP 2 722 724 B1

## Description

FIELD OF THE INVENTION

The present invention relates to tracking a maximum power point in a photovoltaic power system, and more particularly to a maximum power point tracking in which an operation point of a photovoltaic system is changed based on a change of produced power.

BACKGROUND OF THE INVENTION

In photovoltaic (PV) power generation systems, the operation point of panels is driven to the best possible operation point, i.e. to a point in which a maximum amount of power can be extracted from the panels. The most common maximum power point tracking (MPPT) method is a perturb&observe (P&O) method and its variations. In this method, the voltage or current reference is constantly changed, and the produced change in generated power is determined. On the basis of the change of power and the change of the reference value (voltage or current), it is determined whether the reference should be decreased or increased for increasing the amount of extracted power.

The variations of a P&O algorithm include changing the sampling frequency or the step size of the reference on the basis of changes of the generated power and the given reference. Further modifications include using multiple samples for determining the change of power due to a changed reference.

The modifications of a P&O scheme relate mainly to increasing the accuracy of the scheme during changes in irradiation. It is a known problem with P&O based algorithms that under constantly changing conditions the algorithm is not able to find the maximum power point.

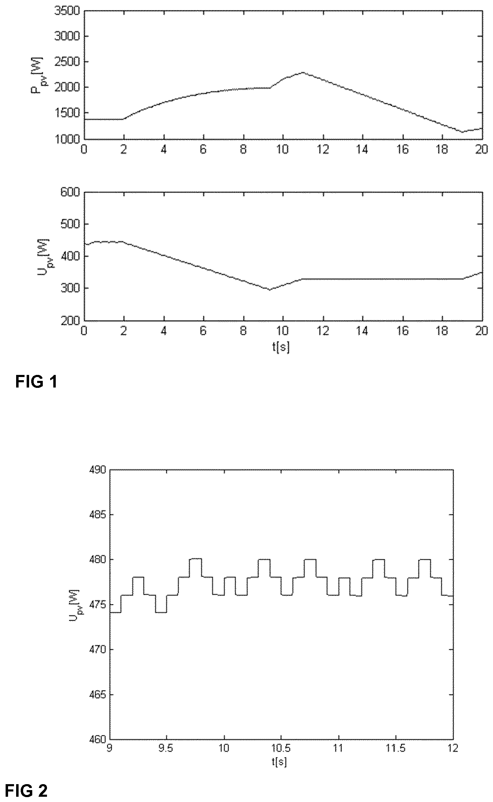

Figure 1 shows the operation of a P&O algorithm during a linear change of irradiation. During increasing irradiation at a time interval of 2 s to 9 s, the voltage of the panel system is decreased during the whole interval, as can be seen in the lower plot of Figure 1. As a consequence, the extracted power does not follow the linearly increasing irradiation as it should, as can be seen in the upper plot of Figure 1. This further means that an MPP algorithm is not able to keep the operation point at the maximum power point. At a time interval of 11 s to 19 s, the irradiation is linearly decreased. The voltage of the panel system (lower plot) is changed back and forth and is thus kept almost at the same level. The extracted power (upper plot) is not at its maximum during the change.

The operation of the P&O method is disturbed by the changing irradiation since the observed change in power results from both the changed irradiation and the changed reference voltage or current. The method itself cannot separate the origin of the power change and therefore arrives at wrong conclusions about the direction of the next voltage or current reference.

The maximum power point voltage of the panel does not change much even when the irradiation level changes from 500W/m$^2$ to 1000W/m$^2$. Therefore the correct operation of the tracker is required and the tracker should change the voltage of the panel system in a controlled manner.

Documents Salas V. et al: "Review of the maximum power point tracking algorithms for stand-alone photovoltaic systems", Solar energy materials and solar cells, Elsevier science publishers, Amsterdam, NL, vol. 90, no. 11, 6 July 2006, pages 1555-1578 and Esram T. et al: "Comparison of Photovoltaic Array Maximum Power Point Tracking Techniques", IEEE Transactions on energy conversion, IEEE Service center, Piscataway, NJ, US, vol. 22, no 2, 1 June 2007, pages 439-449 provide an overview of different maximum power point schemes.

Document D. Sera et al: "Improved MPPT method for rapidly changing environmental conditions", 2006 IEEE International Symposium on Industrial Electronics, 1 July 2006, pages 1420-1425 discloses to measure the power from the panels between two MPPT sampling instances to remove the effect of changing irradiation in the operation of P&O method.

BRIEF DESCRIPTION OF THE INVENTION

An object of the present invention is to provide a method and an arrangement for implementing the method so as to solve the above problem. The object of the invention is achieved by a method and an arrangement which are characterized by what is stated in the independent claims. Preferred embodiments of the invention are disclosed in the dependent claims.

The invention is based on the idea of storing values of power and current or voltage used in the MPPT algorithm and using the stored values for correcting the operation of the algorithm and thereby enhancing the extraction of power.

In the invention, the historic data of the MPPT algorithm is used and therefore no additional measurements are needed for correcting the operation of the algorithm. Only when no historic data about a present operation point is available is the operation point changed to achieve an additional data point. The invention enables the maximum power to be extracted even under rapidly changing irradiation conditions.

BRIEF DESCRIPTION OF THE DRAWINGS

In the following, the invention will be described in greater detail by means of preferred embodiments and with reference to the accompanying drawings, in which

Figure 1 shows power and voltage waveforms of a P&O algorithm with linearly changing irradiation;
Figure 2 shows typical voltage variations in a P&O algorithm; and

Figure 3 shows power and voltage waveforms obtained from an MPP tracker of the present invention with linearly changing irradiation.

DETAILED DESCRIPTION OF THE INVENTION

The operation principle of a P&O MPPT algorithm is known per se. The P&O algorithm is based on perturbing the panel voltage or current and observing the change in panel power. When the voltage of the panel is increased and this leads to increase in power, the voltage is again increased to increase the power even further. If the voltage of the panel is increased and it causes the panel power to decrease, the voltage is decreased. When the voltage of the panel is decreased and the power output increases, the voltage is further decreased at the next instant, and if the power output decreases with a decreasing voltage step, the voltage of the panel is increased. In short, when in the P&O algorithm the obtained power increases, the panel voltage is changed in the same direction as in a previous step, and when the power decreases, the voltage step is made in an opposite direction as compared with a previous step.

In the P&O method, the operation is continuously looped. An operation loop has functions in which the power of the panel is determined, the change of power with respect to a previous value is determined, the direction of the next change of voltage is determined based on a previous direction of change and direction of power change, and the new voltage of the panel is calculated. The calculated value of the panel voltage is given to a controller that controls an electric apparatus connected to the output of the panel in such a manner that the actual panel voltage corresponds to the calculated reference value. When the operation point is changed, the loop is started again. The direction of change mentioned above refers to an increase or decrease of voltage or power.

In steady operating conditions, the voltage of the panel varies as shown in Figure 2. It can be seen that the voltage varies stepwise after each sampling period, and in steady operating conditions the voltage varies between three voltage levels.

In the present invention, each time the output voltage or output current of the panel is changed, the output voltage or output current and the obtained power are stored together with a time instant, time stamp or a serial number n of the data. The serial number or the like is a growing number increasing each time the operation is looped. If a serial number is used, the storage should happen with uniform time intervals. If, on the other hand, time stamps are stored with a data pair, the storage is not required to occur at uniform time intervals.

When the size of the voltage step is kept the same, the historic data contains values of power having a present voltage value. When such a voltage value is found from the history data, two separate values of power from two separate time instants are provided.

According to the present invention, the change of power used in determining the direction of the next voltage change is calculated based on a present time instant k value of power P(k), a previous value of power P(k-1), a stored value of power P(m) having a voltage value corresponding to a present voltage value and a time instant (m) of the stored value of power P(m).

Thus, according to the invention, when the solar panel voltage is changed at a time step k, the power P(k) is determined. In a basic P&O scheme, the change of power $\Delta P$ is measured simply by subtracting a previous value of power from the current value P(k) - P(k-1), and the direction of the next voltage change is based on the sign of the subtraction. In the present invention, a further compensation term $P_{comp}$ is subtracted from the change of power $\Delta P$.

The compensation term, $P_{comp}$, is formed based on the assumption that a change in the power caused by the changing irradiation is linear. A gradient (of the change) is calculated from the present operation point (k) and the saved historic data having the same voltage or current value as the present voltage or current (m).

Preferably, the gradient G is calculated by subtracting the values of power P(k) - P(m) and dividing the result with the time interval between the values of power, i.e.

$$G = \frac{P(k) - P(m)}{k - m} .$$

Then the compensation term $P_{comp}$ can be calculated by multiplying the gradient by the time between the two latest steps, i.e.

$$P_{comp} = G * (k - (k-1)) .$$

If the sampling time is varying, the gradient can be estimated by

$$G = \frac{P(t) - P(t_{old})}{t - t_{old}}$$

and the compensation term as

$$P_{comp} = G * T_{sample} ,$$

where t is the present time, $t_{old}$ is the time of the historic data, and $t_{sample}$ is the latest sample time period.

The compensation term removes the effect of the changed irradiation when the power changes linearly between the measurements. Although the change may not be linear, the compensation term still eliminates quite effectively the influence of the irradiation changes.

Further, the compensation term is most accurate when a previous value of power with the present voltage value is as recent as possible, i.e. when the time difference k-m between the power values is as small as possible. Thus it is advisable to search for the corresponding stored value starting from the most recent value backwards. Once a corresponding voltage value is found, the search is ended and the value is used for calculating the compensation term.

In an embodiment, if the historic data has no value corresponding to the present voltage, the solar panel voltage is changed by one step in a direction opposite to the previous direction of voltage change. After that the historic data contains a value of power corresponding to the present voltage, and therefore the compensation term can be calculated. Another option for a situation wherein no historic data is available is to ignore the calculation of the compensation term for that instant. When no compensation term is calculated, the values of power and voltage or current together with the time stamp are still stored.

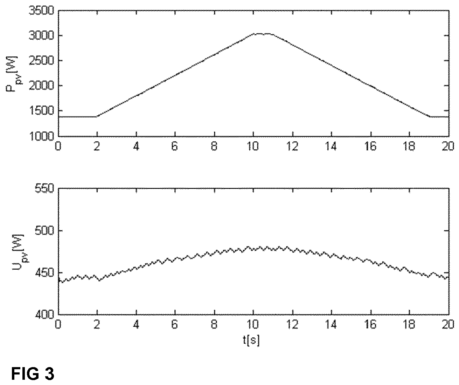

Figure 3 shows simulated waveforms using the method of the invention with linearly increasing and decreasing irradiations as shown in Figure 1. As seen in the lower plot of Figure 3, the MPP voltage stays in the close vicinity of the voltage corresponding to the maximum power point voltage, and thereby the obtained power (upper plot) follows the changing irradiation.

The power of the solar panel system used in the method is not necessarily measured from the output of the panel system. As is known, the photovoltaic power generating system comprises power electronic devices connected to the output of the panel system. The power electronic devices take care of the control of the system such that the voltage from the panel system is controlled to the value given by the maximum power point tracker. Further, the electronic devices may be used for changing the voltage level of the extracted power and/or for inverting the voltage to alternating voltage so that the voltage can be fed to the grid. The power of the solar panel may be any measured power indicating the actual power so that the MPP tracker can operate. The power may be measured from the output of the power generating system, for example. Further, the power of the solar panel system may also be an estimated value corresponding to the actual value. The estimated power can be an estimate based on current measurement and estimated voltage. The estimated voltage can be the voltage value given as a reference to a converter that controls the output voltage of the panels. Another option for estimating the power is to measure a current in a circuit structure in which the voltage has a constant value.

In the above description, the voltage of the panel system is used together with the power of the panel system. It is to be understood that in the method, the current from the panel system can also be used in the place of voltage. That is to say that the maximum power point tracker is based on using current together with power. In current based trackers, the current from the panel is changed stepwise and the resulting power is determined. On the basis of the change of power, the output current from the panel system is controlled stepwise. The operation principle of the invention is similar to that when using voltage.

The compensated power change ΔP can further be used in adapting the MPP algorithm since the magnitude of the term gives an indication of how far away the operating point is from the maximum power point. The adaptation can be carried out by modifying the amount of voltage or current which is changed. If the ΔP is great, a great step is applied, and when the ΔP is small, the step size can be selected to be smaller. In an adaptation process it is advisable to select a step size that is a multiple of the basic step size. The selection of a multiple of the basic step size allows for a possibility that the historic data may still contain voltage or current values which will match present values.

The arrangement of the invention is adapted to carry out the method of the invention. The arrangement comprises means for storing the required data and means for reading the stored data. It is clear to a skilled person that such means may be a memory that can be indexed using a processor or the like. As is known, the maximum power point trackers need some processing capacity. This same processing capacity may be used for implementing the novel features of the invention.

The photovoltaic system mentioned above contains a photovoltaic panel system. Such a panel system may comprise any number of parallel or series connected photovoltaic elements. The photovoltaic system further includes a converter needed for the operation of the maximum power point tracker. For the purpose of the invention, the photovoltaic system may be a grid tied system or a stand-alone system providing power to a battery or to some other DC or AC load.

It will be obvious to a person skilled in the art that, as technology advances, the inventive concept can be implemented in various ways. The invention and its embodiments are not limited to the examples described above but may vary within the scope of the claims.

**Claims**

1. A method of tracking a maximum power point of a photovoltaic system, in which method an operation point of the photovoltaic system is changed based on the change of operation point and a change of power generated by the photovoltaic system, the method comprising repeatedly
determining a current or voltage of the photovoltaic system,
determining a power of the photovoltaic system,
determining a change of power of the photovoltaic system with respect to a previous determined power,
changing the operation point of the photovoltaic system by changing a current or voltage reference of the system stepwise depending on the change of power and a direction of a previous change of the current or voltage reference, **characterized in that** the method comprises

storing the determined values of current or voltage and the determined power of the photovoltaic system together with a time value,

wherein the determination of the change of power (ΔP) of the photovoltaic system comprises

reading from the stored values a previous value of determined power and its time value having a current or voltage value equalling a present current or voltage value,

calculating the change of power from the current value of power (P(k)), previous value of power (P(k-1)), stored value of power (P(m)) having a current or voltage value corresponding to a present current or voltage, and the time value (m) of the stored value of power (P(m)),

wherein calculating the change of power comprises forming a compensation term ($P_{comp}$) which defines the change of power due to change of irradiation between time values of current value of power and previous value of power, wherein the change of power due to change of irradiation is determined on the basis of the stored value of power (P(m)) and current value of power (P(k)) and their time values, and subtracting the formed compensation term from the difference between current value of power and previous value of power.

2. A method of tracking a maximum power point according to claim 1, **characterized in that** the calculation of the change of power comprises calculating a difference between the current value of power (P(k)) and the previous value of power (P(k-1)) and subtracting a compensation term ($P_{comp}$) from the calculated difference, the compensation term being calculated by calculating a gradient (G) of change of power from a present operating point (k) and the stored historic data having the same voltage or current value as the present voltage or current (m) as

$$G = \frac{P(k) - P(m)}{k - m}$$

and multiplying the calculated gradient (G) by a time interval between the values of power for obtaining the compensation term as

$$P_{comp} = G * (k - (k-1)).$$

3. A method of tracking a maximum power point according to claim 1, **characterized in that** if the stored values do not include the current or voltage value equalling the present current or voltage value, the method comprises the step of changing the current or voltage reference in a direction opposite to the previous change of the current or voltage reference.

4. A method of tracking a maximum power point according to claim 1, 2 or 3, **characterized in that** the change of power (ΔP) is further used for adapting a current or voltage step size.

5. A method of tracking a maximum power point according to any of the preceding claims 1 to 4, **characterized in** the that the determination of the current or voltage of the photovoltaic system comprises measuring or estimating an output voltage or output current of a photovoltaic panel system of the photovoltaic system.

6. A method of tracking a maximum power point according to any of the preceding claims 1 to 4, **characterized in** the that the determination of the current or voltage of the photovoltaic system comprises using the reference value of the current or voltage.

7. A method of tracking a maximum power point according to any of the preceding claims 1 to 6, **characterized in** the that the determination of the power of the photovoltaic system comprises determining the power obtained from the panel system of the photovoltaic system, determining the power in a converter used in the photovoltaic system or determining the power outputted by the photovoltaic system.

8. An arrangement for tracking a maximum power point of a photovoltaic system, in which arrangement an operation point of the photovoltaic system is changed based on the change of operation point and a change of power generated by the photovoltaic system, the arrangement comprising

means for determining a current or voltage of the photovoltaic system,

means for determining a power of the photovoltaic system,

means for determining a change of power of the photovoltaic system with respect to a previous determined power,

means for changing the operation point of the photovoltaic system by changing a current or voltage reference of the system stepwise depending on the change of power and a direction of a previous change of the current or voltage reference, **characterized in that** the arrangement comprises

means for storing the determined values of current or voltage and the determined power of the photovoltaic system together with a time value,

wherein the means for determining the change of power (ΔP) of the photovoltaic system comprise

means for reading from the stored values a previous value of determined power and its time value having a current or voltage value equalling a present current or voltage value,

means for calculating the change of power from the current value of power (P(k)), previous value of power (P(k-1)), stored value of power (P(m)) having a current or voltage value corresponding to a present current or voltage, and the time value (m) of the stored value of power (P(m)), wherein means for calculating the change of power comprises

means for forming a compensation term ($P_{comp}$) which defines the change of power due to change of irradiation between time values of current value of power and previous value of power, wherein the change of power due to change of irradiation is determined on the basis of the stored value of power (P(m)) and current value of power (P(k)) and their time values, and

means for subtracting the formed compensation term from the difference between current value of power and previous value of power.

## Patentansprüche

1. Verfahren zum Nachverfolgen eines Maximalleistungspunktes eines Fotovoltaiksystems, in welchem Verfahren, basierend auf der Betriebspunktveränderung und einer Veränderung der durch das Fotovoltaiksystem erzeugten Leistung, ein Betriebspunkt des Fotovoltaiksystems verändert wird, wobei das Verfahren wiederholt umfasst

   Bestimmen eines Stroms oder einer Spannung des Fotovoltaiksystems, Bestimmen einer Leistung des Fotovoltaiksystems,

   Bestimmen einer Leistungsveränderung des Fotovoltaiksystems in Bezug auf eine zuvor bestimmte Leistung,

   Verändern des Betriebspunkts des Fotovoltaiksystems durch schrittweises Verändern einer Strom- oder Spannungsreferenz des Systems, abhängig von der Leistungsveränderung und einer Richtung einer vorherigen Veränderung der Strom- oder Spannungsreferenz, **dadurch gekennzeichnet, dass** das Verfahren

   Speichern der für Strom oder Spannung bestimmten Werte und der für das Fotovoltaiksystem bestimmten Leistungswerte, zusammen mit einem Zeitwert, umfasst,

   wobei das Bestimmen der Leistungsveränderung ($\Delta$P) des Fotovoltaiksystems umfasst

   aus den gespeicherten Werten einen vorherigen Wert für bestimmte Leistung und deren Zeitwert zu lesen, der einen Strom- oder Spannungswert hat, der einem vorliegenden Strom- oder Spannungswert gleicht,

   die Leistungsveränderung aus dem aktuellen Leistungswert (P(k)), vorherigen Leistungswert (P(k-1)), gespeicherten Leistungswert (P(m)), der einen Strom- oder Spannungswert hat, der einem vorliegenden Strom oder einer vorliegenden Spannung entspricht, und dem Zeitwert (m) des gespeicherten Leistungswerts (P(m)) berechnen,

   wobei Berechnen der Leistungsveränderung umfasst

   einen Kompensationsterm ($P_{comp}$) zu bilden, der die Leistungsveränderung aufgrund von Bestrahlungsveränderung zwischen Zeitwerten von aktuellem Leistungswert und vorherigem Leistungswert definiert, wobei die Leistungsveränderung aufgrund von Bestrahlungsveränderung auf der Basis des gespeicherten Leistungswerts (P(m)) und aktuellen Leistungswerts (P(k)) und deren Zeitwerten definiert wird, und

   den gebildeten Kompensationsterm von der Differenz zwischen aktuellem Leistungswert und vorherigem Leistungswert zu subtrahieren.

2. Verfahren zum Nachverfolgen eines Maximalleistungspunktes nach Anspruch 1, **dadurch gekennzeichnet, dass** die Berechnung der Leistungsveränderung das Berechnen einer Differenz zwischen dem aktuellen Leistungswert (P(k)) und dem vorherigen Leistungswert (P(k-1)) sowie der Subtraktion eines Kompensationsterms ($P_{comp}$) von der berechneten Differenz umfasst, wobei der Kompensationsterm wie gezeigt durch Berechnen eines Gradienten (G) der Leistungsveränderung, aus einem vorliegenden Betriebspunkt (k) und den gespeicherten historischen Daten, die denselben Spannungs- oder Stromwert haben wie die vorliegende Spannung oder der vorliegende Strom (m) berechnet wird:

$$G = \frac{P(k) - P(m)}{k - m}$$

   und den berechneten Gradienten (G) wie gezeigt mit einem Zeitintervall zwischen den Leistungswerten zum Erhalten des Kompensationsterms zu multiplizieren:

$$Pcomp = G * \big(k - (k - 1)\big)$$

3. Verfahren zum Nachverfolgen eines Maximalleistungspunktes nach Anspruch 1, **dadurch gekennzeichnet, dass**, wenn die gespeicherten Werte nicht den Strom- oder Spannungswert aufweisen, der dem vorliegenden Strom- oder Spannungswert gleicht, das Verfahren den Schritt des Veränderns der Strom- oder Spannungsreferenz in eine Richtung umfasst, die der vorherigen Strom- oder Spannungsreferenz entgegengesetzt ist.

**4.** Verfahren zum Nachverfolgen eines Maximalleistungspunktes nach Anspruch 1, 2 oder 3, **dadurch gekennzeichnet, dass** die Leistungsveränderung (ΔP) weiter zum Anpassen einer Strom- oder Spannungsschrittgröße verwendet wird.

**5.** Verfahren zum Nachverfolgen eines Maximalleistungspunktes nach einem der vorstehenden Ansprüche 1 bis 4, **dadurch gekennzeichnet, dass** das Bestimmen des Stroms oder der Spannung des Fotovoltaiksystems Messen oder Schätzen einer Ausgangsspannung oder eines Ausgangsstroms eines fotovoltaischen Panelsystems des Fotovoltaiksystems umfasst.

**6.** Verfahren zum Nachverfolgen eines Maximalleistungspunktes nach einem der vorstehenden Ansprüche 1 bis 4, **dadurch gekennzeichnet, dass** das Bestimmen des Stroms oder der Spannung des Fotovoltaiksystems Verwenden der Referenzwerte des Stroms oder der Spannung umfasst.

**7.** Verfahren zum Nachverfolgen eines Maximalleistungspunktes nach einem der vorstehenden Ansprüche 1 bis 6, **dadurch gekennzeichnet, dass** das Bestimmen der Leistung des Fotovoltaiksystems Bestimmen der Leistung, die durch das Panelsystem des Fotovoltaiksystems erhalten wurde, Bestimmen der Leistung, die in einem Umwandler in dem Fotovoltaiksystem verwendet wird oder Bestimmen der Leistung, die durch das Fotovoltaiksystem ausgegeben wird, umfasst.

**8.** Anordnung zum Nachverfolgen eines Maximalleistungspunktes eines Fotovoltaiksystems, in welcher Anordnung, basierend auf der Betriebspunktveränderung und einer Veränderung der durch das Fotovoltaiksystem erzeugten Leistung, ein Betriebspunkt des Fotovoltaiksystems verändert wird, wobei die Anordnung umfasst
Mittel zum Bestimmen eines Stroms oder einer Spannung des Fotovoltaiksystems,
Mittel zum Bestimmen einer Leistung des Fotovoltaiksystems,
Mittel zum Bestimmen einer Leistungsveränderung des Fotovoltaiksystems gegenüber einer zuvor bestimmten Leistung,
Mittel zum Verändern des Betriebspunkts des Fotovoltaiksystems durch schrittweises Verändern einer Strom- oder Spannungsreferenz des Systems, abhängig von der Leistungsveränderung und einer Richtung einer vorherigen Veränderung der Strom- oder Spannungsreferenz, **dadurch gekennzeichnet, dass** die Anordnung umfasst
Mittel zum Speichern der bestimmten Werte von Strom oder Spannung und der bestimmten Leistung des Fotovoltaiksystems zusammen mit einem Zeitwert, wobei die Mittel zum Bestimmen der Leistungsveränderung (ΔP) des Fotovoltaiksystems
Mittel umfassen, um aus den gespeicherten Werten einen vorherigen Wert für eine bestimmte Leistung und deren Zeitwert zu lesen, der einen Strom- oder Spannungswert hat, der einem vorliegenden Strom- oder Spannungswert gleicht,
Mittel zum Berechnen der Leistungsveränderung aus dem aktuellen Leistungswert (P(k)), vorherigen Leistungswert (P(k-1)), gespeicherten Leistungswert (P(m)), der einen Strom- oder Spannungswert hat, der einem vorliegenden Strom oder einer vorliegenden Spannung entspricht, und dem Zeitwert (m) des gespeicherten Leistungswerts (P(m)) umfasst, wobei die Mittel zur Berechnung der Leistungsveränderung umfassen
Mittel, um einen Kompensationsterm (P$_{comp}$) zu bilden, der die Leistungsveränderung aufgrund von Bestrahlungsveränderung zwischen Zeitwerten von aktuellem Leistungswert und vorherigem Leistungswert definiert, wobei die Leistungsveränderung aufgrund von Bestrahlungsveränderung auf der Basis des gespeicherten Leistungswerts (P(m)) und aktuellen Leistungswerts (P(k)) und deren Zeitwerten definiert wird, und
Mittel, um den gebildeten Kompensationsterm von der Differenz zwischen aktuellem Leistungswert und vorherigem Leistungswert zu subtrahieren.

**Revendications**

**1.** Procédé de suivi de point de puissance maximale d'un système photovoltaïque, dans lequel procédé un point de fonctionnement du système photovoltaïque est changé sur la base du changement d'un point de fonctionnement et d'un changement d'une puissance générée par le système photovoltaïque, le procédé comprenant, de façon répétée
la détermination d'un courant ou une tension du système photovoltaïque ;
la détermination d'une puissance du système photovoltaïque ;
la détermination d'un changement de puissance du système photovoltaïque par rapport à une puissance déterminée précédente ;
le changement du point de fonctionnement du système photovoltaïque en changeant une référence de courant ou de tension du système, par étapes, en fonction du changement de puissance et d'une direction d'un changement précédent de la référence de courant ou de tension, **caractérisé en ce que** le procédé comprend
le stockage des valeurs déterminées de courant ou de tension et la puissance déterminée du système photovoltaïque conjointement avec une valeur temps,
dans lequel la détermination du changement de puissance (ΔP) du système photovoltaïque comprend

la lecture, à partir des valeurs stockées, d'une valeur précédente de puissance déterminée et de sa valeur temps ayant une valeur de courant ou de tension équivalente à une valeur de courant ou de tension présente ;

le calcul du changement de puissance à partir de la valeur actuelle de puissance (P(k)), d'une valeur précédente de puissance (P(k-1)), d'une valeur stockée de puissance (P(m)) ayant une valeur de courant ou de tension correspondant à un courant ou une tension présent, et de la valeur temps (m) de la valeur stockée de puissance (P(m)),

dans lequel le calcul du changement de puissance comprend

la formation d'un terme de compensation (P$_{comp}$) qui définit le changement de puissance dû à un changement d'irradiation entre des valeurs temps d'une valeur actuelle de puissance et une valeur précédente de puissance, dans lequel le changement de puissance dû à un changement d'irradiation est déterminé sur la base de la valeur stockée de puissance (P(m)) et de la valeur actuelle de puissance (P(k)) et de leurs valeurs temps, et

la soustraction du terme de compensation formé de la différence entre une valeur actuelle de puissance et une valeur précédente de puissance.

2. Procédé de suivi de point de puissance maximale selon la revendication 1, **caractérisé en ce que** le calcul du changement de puissance comprend le calcul d'une différence entre la valeur actuelle de puissance (P(k)) et la valeur précédente de puissance (P(k-1)), et la soustraction d'un terme de compensation (P$_{comp}$) de la différence calculée, le terme de compensation étant calculé en calculant un gradient (G) de changement de puissance par rapport à un point de fonctionnement actuel (k) et les données historisées stockées ayant la même valeur de tension ou de courant que la tension ou le courant présent (m) en tant que

$$G = \frac{P(k) - P(m)}{k - m}$$

et la multiplication du gradient calculé (G) par un intervalle de temps entre les valeurs de puissance pour obtenir le terme de compensation en tant que

$$Pcomp = G * \big(k - (k - 1)\big)$$

3. Procédé de suivi de point de puissance maximale selon la revendication 1, **caractérisé en ce que**, si les valeurs stockées ne comprennent pas la valeur de courant ou de tension équivalente à la valeur de courant ou de tension présente, le procédé comprend l'étape consistant à changer la référence de courant ou de tension dans une direction opposée au précédent changement de la référence de courant ou de tension.

4. Procédé de suivi de point de puissance maximale selon la revendication 1, 2 ou 3, **caractérisé en ce que** le changement de puissance (ΔP) est utilisé en outre pour adapter une taille de pas de courant ou de tension.

5. Procédé de suivi de point de puissance maximale selon l'une quelconque des revendications précédentes 1 à 4, **caractérisé en ce que** la détermination du courant ou de la tension du système photovoltaïque comprend la mesure ou l'estimation d'une tension de sortie ou un courant de sortie d'un système de panneaux photovoltaïques du système photovoltaïque.

6. Procédé de suivi de point de puissance maximale selon l'une quelconque des revendications précédentes 1 à 4, **caractérisé en ce que** la détermination du courant ou de la tension du système photovoltaïque comprend l'utilisation de la valeur de référence du courant ou de la tension.

7. Procédé de suivi de point de puissance maximale selon l'une quelconque des revendications précédentes 1 à 6, **caractérisé en ce que** la détermination de la puissance du système photovoltaïque comprend la détermination de la puissance obtenue à partir du système de panneaux du système photovoltaïque, la détermination de la puissance dans un convertisseur utilisé dans le système photovoltaïque ou la détermination de la puissance délivrée en sortie par le système photovoltaïque.

8. Agencement de suivi de point de puissance maximale d'un système photovoltaïque, dans lequel agencement un point de fonctionnement du système photovoltaïque est changé sur la base du changement d'un point de fonctionnement et d'un changement d'une puissance générée par le système photovoltaïque, l'agencement comprenant

des moyens pour déterminer un courant ou une tension du système photovoltaïque ;
des moyens pour déterminer une puissance du système photovoltaïque ;
des moyens pour déterminer un changement de puissance du système photovoltaïque par rapport à une puissance déterminée précédente ;
des moyens pour changer le point de fonctionnement du système photovoltaïque en changeant une référence de courant ou de tension du système, par étapes, en fonction du changement de puissance et d'une direction d'un changement précédent de la référence de courant ou de tension, **caractérisé en**

**ce que** l'agencement comprend

des moyens pour stocker les valeurs déterminées de courant ou de tension et la puissance déterminée du système photovoltaïque conjointement avec une valeur temps,

dans lequel les moyens pour déterminer le changement de puissance ($\Delta$P) du système photovoltaïque comprennent

des moyens pour lire, à partir des valeurs stockées, une valeur précédente de puissance déterminée et sa valeur temps ayant une valeur de courant ou de tension équivalente à une valeur de courant ou de tension présente,

des moyens pour calculer le changement de puissance à partir de la valeur actuelle de puissance (P(k)), d'une valeur précédente de puissance (P(k-1)), d'une valeur stockée de puissance (P(m)) ayant une valeur de courant ou de tension correspondant à un courant ou une tension présent, et la valeur temps (m) de la valeur stockée de puissance (P(m)), dans lequel les moyens pour calculer le changement de puissance comprennent

des moyens pour former un terme de compensation ($P_{comp}$) qui définit le changement de puissance dû à un changement d'irradiation entre des valeurs temps d'une valeur actuelle de puissance et d'une valeur précédente de puissance, dans lequel le changement de puissance dû à un changement d'irradiation est déterminé sur la base de la valeur stockée de puissance (P(m)) et de la valeur actuelle de puissance (P(k)) et de leurs valeurs temps, et

des moyens pour soustraire le terme de compensation formé de la différence entre une valeur actuelle de puissance et une valeur précédente de puissance.

**FIG 1**

**FIG 2**

**FIG 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Review of the maximum power point tracking algorithms for stand-alone photovoltaic systems. **SALAS V. et al.** Solar energy materials and solar cells. Elsevier science publishers, 06 July 2006, vol. 90, 1555-1578

- Comparison of Photovoltaic Array Maximum Power Point Tracking Techniques. **ESRAM T. et al.** IEEE Transactions on energy conversion. IEEE Service center, 01 June 2007, vol. 22, 439-449
- **D. SERA et al.** Improved MPPT method for rapidly changing environmental conditions. *IEEE International Symposium on Industrial Electronics,* 01 July 2006, 1420-1425